# EUROPÄISCHE PATENTSCHRIFT

(11) **EP 0 642 860 B1**
(45) Veröffentlichungstag und Bekanntmachung des Hinweises auf die Patenterteilung: **09.12.1998**
(21) Anmeldenummer: 94109348.6
(22) Anmeldetag: 17.06.1994
(51) Int. Cl.: B23B 31/26, B23B 31/30

(54) **Vorrichtung zur Betätigung eines Spannkopfes**
Device for actuating a clamping-head
Dispositif pour l'actionnement d'une tête de serrage

(30) Priorität: 10.09.1993 DE 4330679
(43) Veröffentlichungstag der Anmeldung: 15.03.1995
(73) Patentinhaber: Röhm, Günter Horst, D-89567 Sontheim (DE)
(72) Erfinder: Hangleiter, Eugen, D-89568 Hermaringen (DE)
(74) Vertreter: Fay, Hermann, Dipl.-Phys. Dr.

(56) Entgegenhaltungen:
- EP-A- 0 219 594
- DE-A- 4 129 597
- DE-C- 3 936 121
- US-A- 5 238 341
- WERKSTATT UND BETRIEB, Bd.124, Nr.4, 1991, MUNCHEN DE Seiten 251 - 254 OTTO ET AL 'Konstruktion eines Werkzeug-Süannzeugs'

## Beschreibung

Die Erfindung betrifft eine Vorrichtung zur Betätigung eines an einer Arbeitsspindel angeordneten Spannkopfes für Werkstücke oder Werkzeuge, insbesondere Steilkegelwerkzeuge, mit einem in Richtung der Achse der Arbeitsspindel verschiebbaren Zugstück des Spannkopfes und einem ebenso verschiebbaren Betätigungsorgan, das in Spannrichtung des Zugstücks von einer Spannfeder beaufschlagt und gegen deren Kraft am Zugstück über Spannkeile abgestützt ist, für die am Zugstück und am Betätigungsorgan gegeneinander geneigte Anlageflächen vorgesehen sind, von welchen die Anlagefläche am Zugstück etwa senkrecht zur Spindelachse steht und die Anlageflächen am Betätigungsorgan in Kraftrichtung der Spannfeder gegen die Spindelachse von außen nach innen geneigt sind, wobei die Spannkeile an einer den Anlageflächen gegenüberliegenden, mit der Arbeitsspindel verbundenen Stützhülse in Anlageflächen abstützbar sind, die in Kraftrichtung der Spannfeder gegen die Spindelachse von innen nach außen geneigt sind.

Vorrichtungen dieser Art sind bekannt und beispielsweise in DEZ.: Werkstatt und Betrieb 124 (1991) 4, Seite 251 bis 254 beschrieben, die den nächstkommenden Stand der Technik darstellt. Die bei den Vorrichtungen durch die Spannkeile erzielte Verriegelung der Spannstellung verhindert durch Selbsthemmung, daß die Kraft der Spannfeder überwunden und das Werkzeug aus dem Innenkegel der Werkzeugspindel ausgehoben werden kann. Aufgehoben wird diese Spannstellung und Verriegelung durch Zurückdrücken des Betätigungsorgans gegen die Kraft der Spannfeder mit Hilfe kraftbetätigter Entspannstößel. Dabei können die Spannkeile in Aussparungen des Betätigungsorgans zurückgedrückt und mit diesem, gemeinsam mit dem Zugstück, weiter verschoben werden, so daß sich die Einspannung des Werkzeugs öffnet. - Diese Aussparungen im Betätigungsorgan sind hinsichtlich der radialen Bauabmessungen der Vorrichtung insgesamt von Nachteil und schwächen das Betätigungsorgan.

Die US 5 238 341 zeigt eine Werkzeug-Spanneinrichtung, bei der ein Werkzeugkopf an einer Arbeitsspindel befestigt wird, in dem ein vom Werkzeugkopf abstehender Flansch in eine Bohrung der Arbeitsspindel eingeführt wird, wobei der Flansch selber eine Bohrung aufweist, in der ein Betätigungsorgan angeordnet ist, das dazu dient, in Führungen der Bohrungswandung angeordnete Spannkeile in radialer Richtung zu verstellen, um sie zum Spannen in eine Nut der Arbeitsspindel eingreifen zu lassen oder sie zum Lösen des Werkzeugkopfes freizugeben. Die Spannkeile weisen auf der dem Betätigungsorgan zugewandten Seite eine hinterschnittene Nut auf, in die das Betätigungsorgan mit einer korrespondierend geformten, geneigten Anlagefläche eingreift, um bei einer axialen Verschiebung des Betätigungsorganes eine radiale Verstellung der Spannkeile in den Führungen der Bohrungswandung zu bewirken. Die Spannkeile sind in der Bohrungswandung geführt und können dementsprechend ausschließlich in radialer Richtung verstellt werden, so daß in Abhängigkeit der Neigung der Anlagefläche des Betätigungsorganes die maximal mögliche radiale Verstellung der Spannkeile mit der maximalen möglichen axialen Verstellung des Betätigungsorganes gekoppelt ist. Es ist nicht möglich, die Spannkeile so weit zu verstellen, daß sie aus den Führungen in der Bohrungswandung austreten und damit eine weitergehende axiale Verstellung des Betätigungsorganes ermöglichen bzw. selber statt in radialer Richtung in axialer Richtung verstellt werden.

Der Erfindung liegt die Aufgabe zugrunde, eine Vorrichtung der eingangs genannten Art so auszubilden und zu verbessern, daß Aussparungen im Betätigungsorgan für die Aufnahme der Spannkeile vermieden werden.

Diese Aufgabe wird bei einer Vorrichtung der eingangs genannten Art dadurch gelöst, daß eine die Spannkeile an den Anlageflächen des Betätigungsorgans bei der - entgegen der Kraftrichtung der Spannfeder erfolgenden - Verschiebung des Betätigungsorgans in eine - bezogen auf die Spindelachse - radial innere Position verstellende Zwangsführung vorgesehen ist, und daß die Spannkeile in der radial inneren Position bei der weiteren Verschiebung des Betätigungsorgans entgegen der Kraftrichtung der Spannfeder in den hohlen Innenraum der Stützhülse einziehbar sind, wobei sie mit ihrer radial äußeren Fläche an der Innenfläche der Stützhülse anliegen.

Durch die Erfindung wird erreicht, daß die Mitnahme der Spannkeile durch das Betätigungsorgan beim Entspannvorgang durch die Zwangsführung der Spannkeile am Betätigungsorgan erfolgt, die sonst zu diesem Zweck erforderlichen Aussparungen für die Spannkeile im Betätigungsorgan also entfallen können, was sich sehr vorteilhaft sowohl auf die Kraftsteifigkeit des Betätigungsorgans als auch darauf auswirkt, daß das Betätigungsorgan geringe radiale Bauabmessungen aufweisen kann, was günstig für die radialen Bauabmessungen der Vorrichtung insgesamt ist.

Die Zwangsführung der Spannkeile am Betätigungsorgan kann im Rahmen der Erfindung auf verschiedene Weise verwirklicht werden. Eine besonders bevorzugte Ausführungsform ist dadurch gekennzeichnet, daß in den Anlageflächen des Betätigungsorgans jeweils eine die Zwangsführung für einen der Spannkeile bildende hinterschnittene Führungsnut ausgebildet ist, in die der Spannkeil formschlüssig mit einem Führungsfuß eingreift. Zweckmäßigerweise sind die Führungsnut und der Führungsfuß schwalbenschwanzförmig ausgebildet.

Hinsichtlich der Führung der Spannkeile empfiehlt es sich weiter, daß auch die Anlageflächen an der Stützhülse für jeden Spannkeil vom Boden einer Führungsnut gebildet sind, deren seitlichen Nutwandungen der Spannkeil mit zueinander parallelen Seitenflächen anliegt. Die Selbsthemmung im Spannzustand ergibt sich dann in einfacher Weise dadurch, daß die Anlageflächen am Zugstück und die Anlageflächen an der Stützhülse miteinander einen Winkel einschließen, der so klein ist, daß zwischen ihnen der Spannkeile in der Entspannrichtung in der Selbsthemmung gehalten ist.

Im einzelnen empfiehlt es sich in konstruktiver Hinsicht, die Anordnung so zu treffen, daß der die Anlagefläche tragende Teil des Zugstücks und das Betätigungsorgan koaxial hintereinander angeordnet und zwischen ihnen die Spannkeile über den Umfang gleichmäßig verteilt angeordnet sind, wobei das Betätigungsorgan als mit der Stützhülse koaxiales Rohrstück ausgebildet ist. Dann empfiehlt es sich im übrigen, daß das Zugstück aus einem seine Anlagefläche tragenden Zugteller und einer damit verbundenen Zugstange besteht, wobei das Betätigungsorgan die Zugstange ringförmig umgibt und im Zugteller axial verschieblich Spannstößel geführt sind, die zwischen den Spannkeilen hindurchgreifen und stirnseitig einenends am Betätigungsorgan anliegen sowie andernends auf der dem Betätigungsorgan gegenüberliegenden Seite des Zugtellers gegen einen kraftbetätigten Stellkolben stoßen.

Im folgenden wird die Erfindung an einem in der Zeichnung dargestellten Ausführungsbeispiel näher erläutert; es zeigen:
- Fig. 1: eine Vorrichtung nach der Erfindung im Axialschnitt, und zwar im Spannzustand,
- Fig. 2: den Gegenstand der Fig. 1 im Entspannzustand,

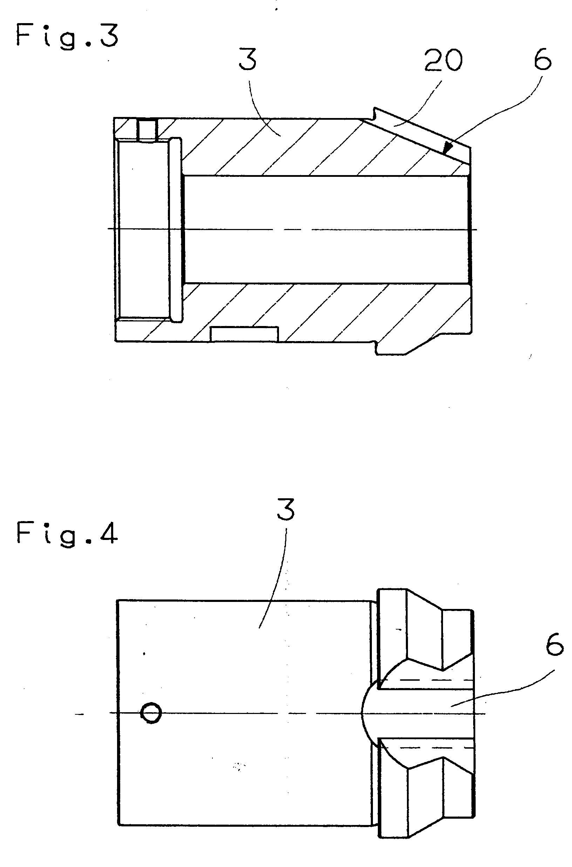

- Fig. 3: das Betätigungsorgan der Vorrichtung nach den Fig. 1 und 2 im Axialschnitt,
- Fig. 4: eine Seitenansicht des Betätigungsorgans nach Fig. 3,

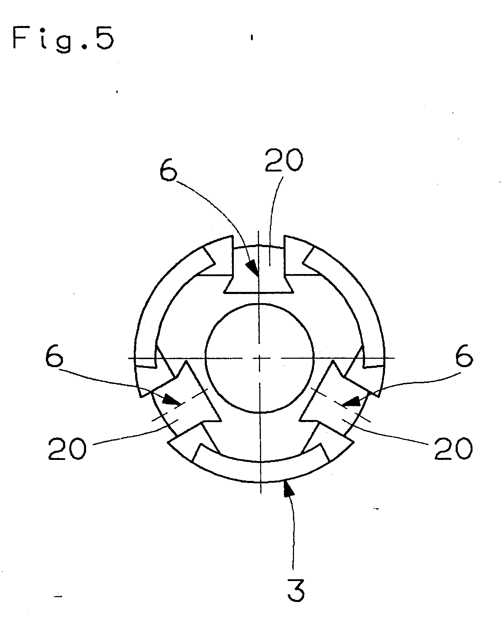

- Fig. 5: eine Stirnansicht des Betätigungsorgans nach den Fig. 3 und 4,

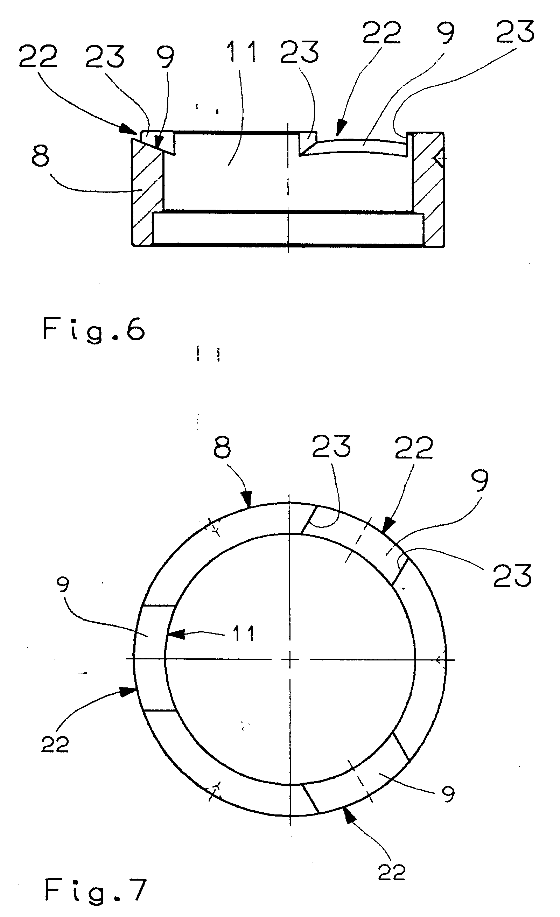

- Fig. 6: die Stützhülse der Vorrichtung nach den Fig. 1 und 2 im Axialschnitt,
- Fig. 7: die Stützhülse nach Fig. 6 in einer Stirnansicht,

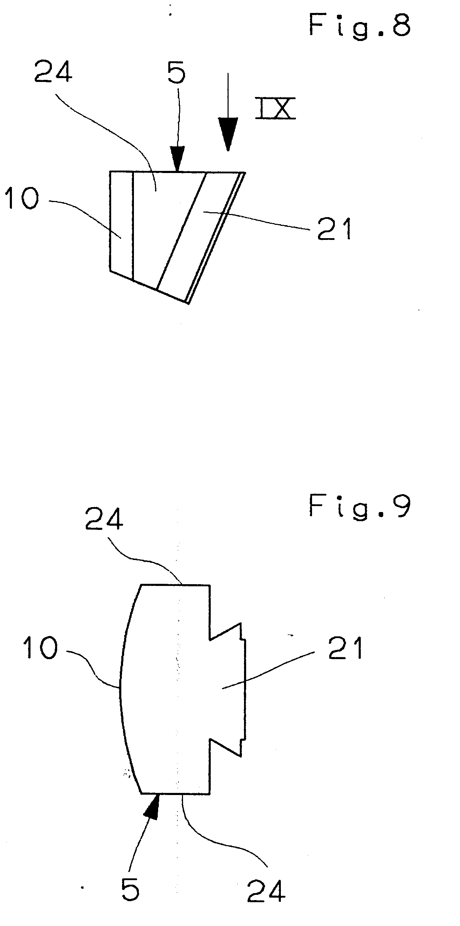

- Fig. 8: einen der Spannkeile der Vorrichtung nach den Fig. 1 und 2 in Seitenansicht,
- Fig. 9: die Stirnansicht des Spannkeils der Fig. 8 in Richtung des dort eingetragenen Pfeiles IX.

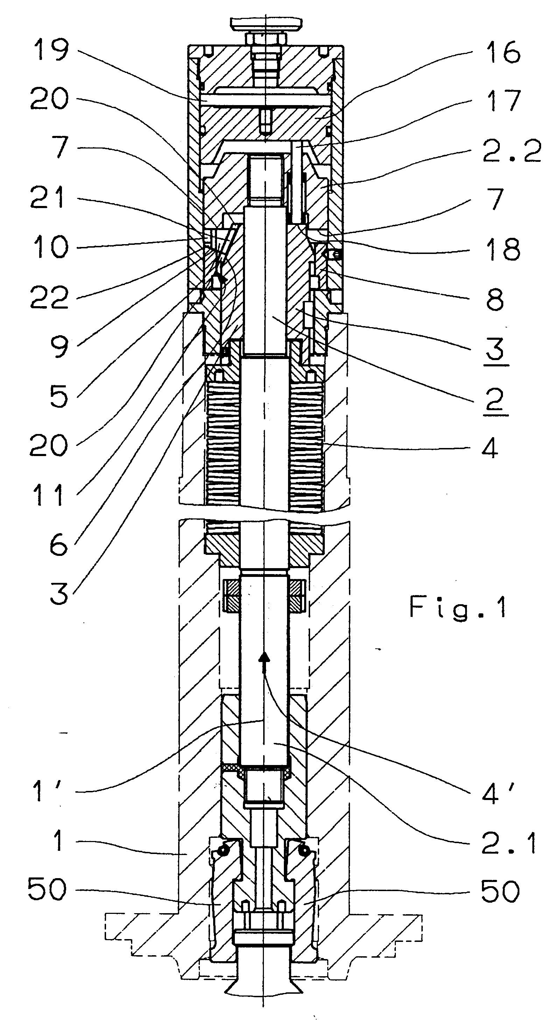

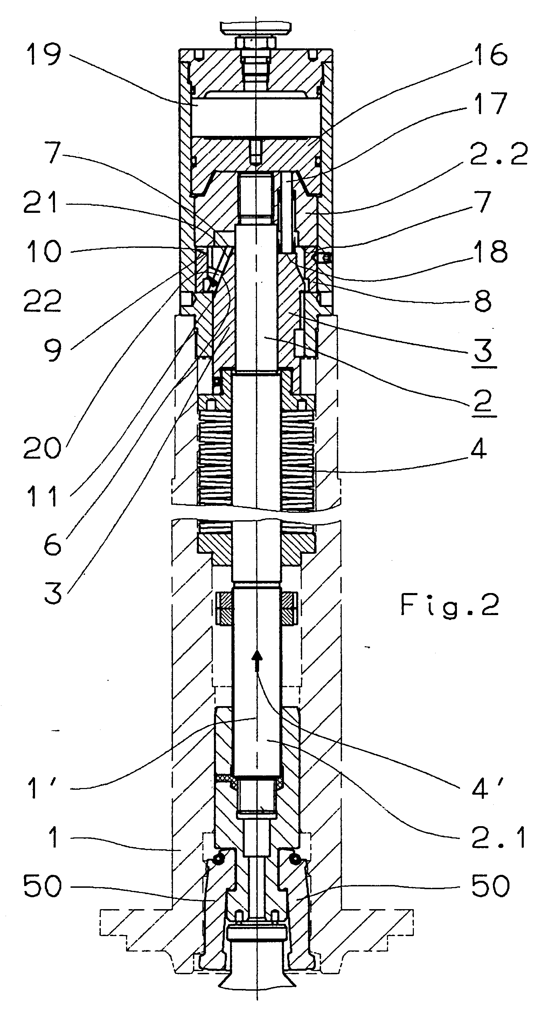

In der Zeichnung ist die Arbeitsspindel 1 lediglich gestrichelt angedeutet. Der an ihrem vorderen Ende befindliche Spannkopf trägt Spannklauen 50, die durch axiales Verschieben einer Zugstange 2.1 in Richtung der Spindelachse 1' betätigt werden. Derartige Spannköpfe sind vielfach bekannt und bedürfen hier keiner weiteren Erläuterungen. Die Zugstange 2.1 durchsetzt die hohle Arbeitsspindel 1 und bildet zusammen mit einem Zugteller 2.2 ein Zugstück 2, wobei die Zugstange 2.1 mit dem Zugteller 2.2 fest verschraubt ist. Zur Verstellung des Zugstücks 2 ist ein ebenfalls in Richtung der Spindelachse 1' verstellbares Betätigungsorgan 3 vorgesehen, das als mit der Zugstange 2.1 und der Spindelachse 1' koaxiales Rohrstück ausgebildet ist und in der Spannrichtung des Zugstücks 2 von einer Spannfeder 4 beaufschlagt ist, die von einem am vorderen Ende der Arbeitsspindel 1 abgestützten Tellerfederpaket gebildet ist. Das Betätigungsorgan 3 ist gegen die Kraft der Spannfeder 4 am Zugstück 2, nämlich dessen Zugteller 2.2 über Spannkeile 5 abgestützt, von denen insgesamt drei vorgesehen und über den Umfang verteilt angeordnet sind. Für diese Spannkeile 5 sind am Zugteller 2.2 und am Betätigungsorgan 3 Anlageflächen 6, 7 vorgesehen, wobei die Anlagefläche 7 am Zugstück 2 etwa senkrecht zur Spindelachse 1' steht und die Anlageflächen 6 am Betätigungsorgan 3 in Kraftrichtung der Spannfeder 4 (Pfeil 4') gegen die Spindelachse 1' von außen nach innen geneigt sind. Die Spannkeile 5 sind weiter an einer den Anlageflächen 6, 7 gegenüber liegenden, mit der Arbeitsspindel 1 fest verbundenen Stützhülse 8 in Anlageflächen 9 abstützbar, die in Kraftrichtung der Spannfeder 4 gegen die Spindelachse 1' von innen nach außen geneigt sind. Die Spannkeile 5 sind an den Anlageflächen 6 des Betätigungsorgans 3 in der Weise zwangsgeführt, daß sie vom Betätigungsorgan 3 auch bei dessen Verschiebung entgegen der Kraftrichtung der Spannfeder 4 aus der in Fig. 1 gezeigten Spannposition bis in eine, bezogen auf die Spindelachse 1' radial innere, in Fig. 2 dargestellte Entspannposition mitgenommen werden, wobei die Spannkeile 5 an der Anlagefläche 9 der Stützhülse 8 einwärts abgleiten. In dieser Entspannposition können die Spannkeile 5 bei der weiteren Verschiebung des Betätigungsorgans 3 entgegen der Kraftrichtung der Spannfeder 4 in den hohlen Innenraum der Stützhülse 8 eingezogen werden, wobei sie mit ihrer radial äußeren Fläche 10 an der Innenfläche 11 der Stützhülse 8 anliegen. Diese Zwangsführung ist im einzelnen dadurch gebildet, daß in den Anlageflächen 6 des Betätigungsorgans 3 für jeden Spannkeil 5 eine hinterschnittene Führungsnut 20 ausgebildet ist, in die der Spannkeil 5 formschlüssig mit einem im Profil entsprechend gestalteten Führungsfuß 21 eingreift. Die Führungsnut 20 und der Führungsfuß 21 sind schwalbenschwanzartig ausgebildet. Sie können im Prinzip auch am Betätigungsorgan 3 und Spannkeil 5 ausgetauscht werden, wobei sich dann der Führungsfuß als Führungsleiste am Betätigungsorgan 3 über den maximal möglichen Verschiebungsweg des Spannkeils 5 erstreckt. Die Spannkeile 5 sind im übrigen auch an der Stützhülse 8 jeweils in einer Führungsnut 22 geführt, deren Boden jeweils die Anlagefläche 9 für den Spannkeil 5 bildet. Der Spannkeil 5 liegt jeweils mit zueinander parallelen Seitenflächen 24 an den seitlichen Nutwandungen 23 der Führungsnut 22 an. Im übrigen schließen die Anlageflächen 7 am Zugstück 2 und die Anlageflächen 9 an der Stützhülse 8 miteinander jeweils einen Winkel ein, der so klein ist, daß zwischen ihnen der Spannkeil 5 in der Entspannrichtung in der Selbsthemmung gehalten ist.

Das Zugstück 2 und das Betätigungsorgan 3 sind koaxial hintereinander angeordnet. Im Zugteller 2.2 sind axial verschieblich Entspannstößel 17 geführt, die zwischen den Spannkeilen 5 hindurchgreifen und stirnseitig einenends an einer zur Spindelachse 1' senkrechten Stirnfläche 18 des Betätigungsorgans 3 anliegen sowie andernends auf der dem Betätigungsorgan 3 gegenüber liegenden Seite des Zugtellers 2.2 gegen einen kraftbetätigten Stellkolben 16 stoßen, der sich in einem Zylinderraum 19 bewegt, der zum Entspannen der Vorrichtung mit einem Druckmedium beaufschlagt werden kann.

Der Winkel der Anlageflächen 6 am Betätigungsorgan 3 gegenüber der Spindelachse 1' beträgt etwa 23°, der Winkel der Anlagefläche 9 an der Stützhülse 8 gegenüber der Spindelachse 1' etwa 68°.

Die Fig. 1 zeigt die Vorrichtung im Spannzustand, in dem die Spannfeder 4 die Spannkeile 5 über das Betätigungsorgan 3 in den Keilraum zwischen den Anlageflächen 9 der Stützhülse 8 und der Anlagefläche 7 des Zugtellers 2.2 drückt. In dieser Spannstellung sind die Spannkeile 5 an den Anlageflächen 9 und 7 in der Selbsthemmung gehalten, so daß das Zugstück 2 aus Zugstange 2.1 und Zugteller 2.2 gegen Zugbeanspruchungen entgegen der Kraftrichtung der Spannfeder 4 verriegelt ist. Zum Entriegeln wird der Stellkolben 16 in Fig. 1 vom Druckmedium nach links verschoben, wobei über die Entspannstößel 17 das Betätigungsorgan 3 gegen die Kraft der Spannfeder 4 zurückgedrückt wird. Dabei werden über die Zwangsführungen 20, 21 die Spannkeile 5 aus ihrer Selbsthemmung herausgezogen, wobei sie sich entlang der Anlageflächen 9 radial nach innen verstellen, bis sie in der aus Fig. 2 ersichtlichen inneren Endposition vom Betätigungsorgan 3 in den Innenraum der Stützhülse 8 eingezogen werden können. In dieser Entspannstellung ist eine Zustellbewegung ohne Wegübersetzung möglich, indem die Axialverschiebung des Betätigungsorgans 3 sich über die Spannkeile 5 unmittelbar auf den Zugteller 2.2 auswirkt, da die Spannkeile 5 durch die Anlage ihrer Außenfläche 10 an der Innenfläche 11 der Stützhülse 8 keine Weg- oder Kraftübersetzung ergeben. Erst wenn das Betätigungsorgan 3 in in Fig. 1 und 2 so weit nach rechts verschoben ist, daß die Spannkeile 5 zwischen die Anlageflächen 7 und 9 eintreten können, ergibt sich der eigentliche Spannhub mit der den an den Anlageflächen 6 und 9 anliegenden Keilflächen entsprechenden hohen Kraftübersetzung.

## Patentansprüche

1. Vorrichtung zur Betätigung eines an einer Arbeitsspindel (1) angeordneten Spannkopfes für Werkstücke oder Werkzeuge, insbesondere Steilkegelwerkzeuge, mit einem in Richtung der Achse (1') der Arbeitsspindel (1) verschiebbaren Zugstück (2) des Spannkopfes und einem ebenso verschiebbaren Betätigungsorgan (3), das in Spannrichtung des Zugstücks (2) von einer Spannfeder (4) beaufschlagt und gegen deren Kraft am Zugstück (2) über Spannkeile (5) abgestützt ist, für die am Zugstück (2) und am Betätigungsorgan (3) gegeneinander geneigte Anlageflächen (6, 7) vorgesehen sind, von welchen die Anlagefläche (7) am Zugstück (2) etwa senkrecht zur Spindelachse (1') steht und die Anlageflächen (6) am Betätigungsorgan (3) in Kraftrichtung der Spannfeder (4) gegen die Spindelachse (1') von außen nach innen geneigt sind, wobei die Spannkeile (5) an einer den Anlageflächen (6, 7) gegenüberliegenden, mit der Arbeitsspindel (1) verbundenen Stützhülse (8) in Anlageflächen (9) abstützbar sind, die in Kraftrichtung der Spannfeder (4) gegen die Spindelachse (1') von innen nach außen geneigt sind, dadurch gekennzeichnet, daß eine die Spannkeile (5) an den Anlageflächen (6) des Betätigungsorgans (3) bei der - entgegen der Kraftrichtung der Spannfeder (4) erfolgenden - Verschiebung des Betätigungsorgans (3) in eine - bezogen auf die Spindelachse (1') - radial innere Position verstellende Zwangsführung vorgesehen ist, und daß die Spannkeile (5) in der radial inneren Position bei der weiteren Verschiebung des Betätigungsorgans (3) entgegen der Kraftrichtung der Spannfeder (4) in den hohlen Innenraum der Stützhülse (8) einziehbar sind, wobei sie mit ihrer radial äußeren Fläche (10) an der Innenfläche (11) der Stützhülse (8) anliegen.

2. Vorrichtung nach Anspruch 1, dadurch gekennzeichnet, daß in den Anlageflächen (6) des Betätigungsorgans (3) jeweils eine die Zwangsführung für einen der Spannkeile (5) bildende hinterschnittene Führungsnut (20) ausgebildet ist, in die der Spannkeil (5) formschlüssig mit einem Führungsfuß (21) eingreift.

3. Vorrichtung nach Anspruch 2, dadurch gekennzeichnet, daß die Führungsnut (20) und der Führungsfuß (21) schwalbenschwanzförmig ausgebildet sind.

4. Vorrichtung nach einem der Ansprüche 1 bis 3, dadurch gekennzeichnet, daß die Anlageflächen (9) an der Stützhülse (8) für jeden Spannkeil (5) vom Boden einer Führungsnut (22) gebildet sind, deren seitliche Nutwandungen (23) der Spannkeil (5) mit zueinander parallelen Seitenflächen (24) anliegt.

5. Vorrichtung nach einem der Ansprüche 1 bis 4, dadurch gekennzeichnet, daß die Anlageflächen (6) am Zugstück (2) und die Anlageflächen (9) an der Stützhülse (8) miteinander einen Winkel einschließen, der so klein ist, daß zwischen ihnen der Spannkeil (5) in der Entspannrichtung in der Selbsthemmung gehalten ist.

6. Vorrichtung nach einem der Ansprüche 1 bis 5, dadurch gekennzeichnet, daß der die Anlagefläche (7) tragende Teil (2.2) des Zugstücks (2) und das Betätigungsorgan (3) koaxial hintereinander angeordnet und zwischen ihnen die Spannkeile (5) über den Umfang gleichmäßig verteilt angeordnet sind, wobei das Betätigungsorgan (3) als mit der Stützhülse (8) koaxiales Rohrstück ausgebildet ist.

7. Vorrichtung nach Anspruch 6, dadurch gekennzeichnet, daß das Zugstück (2) aus einem seine Anlagefläche (7) tragenden Zugteller (2.2) und einer damit verbundenen Zugstange (2.1) besteht, wobei das Betätigungsorgan (3) die Spannstange (2.1) ringförmig umgibt und im Zugteller (2.2) axial verschieblich Spannstößel (17) geführt sind, die zwischen den Spannkeilen (5) hindurchgreifen und stirnseitig einenends am Betätigungsorgan (3) anliegen sowie andernends auf der dem Betätigungsorgan (3) gegenüberliegenden Seite des Zugtellers (2.2) gegen einen kraftbetätigten Stellkolben (16) stoßen.

## Claims

1. An arrangement for actuating a clamping head which is arranged on a working spindle (1) for workpieces or tools, in particular steep-angle taper tools, having a pulling portion (2) of the clamping head, which is displaceable in the direction of the axis (1') of the working spindle (1), and an actuating member (3) which is likewise displaceable and which is urged in the clamping direction of the pulling portion (2) by a clamping spring (4) and is supported against the force thereof against the pulling portion (2) by way of clamping taper members (5) for which the pulling portion (2) and the actuating member (3) are provided with inclined contact surfaces (6, 7) in opposite relationship, of which the contact surface (7) on the pulling portion (2) is approximately perpendicular to the spindle axis (1') and the contact surfaces (6) on the actuating member (3) are inclined from the outside inwardly in the direction of force of the clamping spring (4) relative to the spindle axis (1'), wherein the clamping taper members (5) can be supported against a support sleeve (8) which is disposed in opposite relationship to the contact surfaces (6, 7) and which is connected to the working spindle (1), in contact surfaces (9) which are inclined from the inside outwardly in the direction of force of the clamping spring (4) with respect to the spindle axis (1'), characterised in that there is provided a positive guide means for displacing the clamping taper members (5) against the contact surfaces (6) of the actuating member (3) upon the displacement of the actuating member (3) which occurs in the opposite direction to the direction of force of the clamping spring (4), into a position which is radially inward with respect to the spindle axis (1'), and that in the radially inward position upon further displacement of the actuating member (3) in the opposite direction to the direction of force of the clamping spring (8) the clamping taper members (5) can be pulled into the hollow interior of the support sleeve (8), in which case they bear with their radially outer surface (10) against the inside surface (11) of the support sleeve (8).

2. An arrangement according to claim 1 characterised in that provided in each of the contact surfaces (6) of the actuating member (3) is a guide groove (20) of undercut configuration which forms the positive guide means for one of the clamping taper members (5) and into which the clamping taper member (5) engages in positively locking relationship with a guide foot (21).

3. An arrangement according to claim 2 characterised in that the guide groove (20) and the guide foot (21) are of a dovetail-shaped configuration.

4. An arrangement according to one of claims 1 to 3 characterised in that the contact surfaces (9) on the support sleeve (8) for each clamping taper member (5) are formed by the bottom of a guide groove (22) against whose lateral groove walls (23) the clamping taper member (5) bears with mutually parallel side surfaces (24).

5. An arrangement according to one of claims 1 to 4 characterised in that the contact surfaces (6) on the pulling portion (2) and the contact surfaces (9) on the support sleeve (8) include with each other an angle which is so small that the clamping taper member (5) is held between them in the unclamping direction in a self-locking condition.

6. An arrangement according to one of claims 1 to 5 characterised in that the part (2.2) of the pulling portion (2), which carries the contact surface (7) and the actuating member (3) are arranged coaxially in succession and the clamping taper members (5) are arranged between them distributed uniformly over the periphery, wherein the actuating member (3) is in the form of a tubular portion which is coaxial with the support sleeve (8).

7. An arrangement according to claim 6 characterised in that the pulling portion (2) comprises a pulling plate (2.2) which carries its contact surface (7) and a pulling bar (2.1) which is connected thereto, wherein the actuating member (3) annularly surrounds the clamping bar (2) and axially displaceably guided in the pulling plate (2.2) are clamping thrust members (17) which engage through between the clamping taper members (5) and which bear at one end against the actuating member (3) and at the other end butt against a power-actuated control piston (16) on the side of the pulling plate (2.2) which is opposite to the actuating member (3).

## Revendications

1. Dispositif pour l'actionnement d'une tête de serrage montée sur une broche de travail (1) et destinée à serrer des pièces ou des outils, notamment des outils pourvus d'un cône à angle obtus, comportant un élément de traction (2) de la tête de serrage, qui coulisse dans la direction de l'axe (1') de la broche de travail (1) et un organe d'actionnement (3), également coulissant, qui est sollicité dans la direction de serrage par un ressort de serrage (4) et qui, sous la force de ce dernier, prend appui sur l'élément de traction (2) par l'intermédiaire de coins de serrage (5), pour lesquels des surfaces de contact (6, 7) inclinées l'une par rapport à l'autre sont aménagées sur l'élément de traction (2) et sur l'organe d'actionnement (3), surfaces parmi lesquelles la surface de contact (7) sur l'élément de traction (2) est sensiblement perpendiculaire à l'axe de broche (1') et la surface de contact (6) sur l'organe d'actionnement (3) est inclinée de l'extérieur vers l'intérieur, dans la direction d'action de la force du ressort de serrage (4), par rapport à l'axe de broche (1'), les coins de serrage (5) prenant appui sur un manchon d'appui (8) lié à la broche de travail (1), disposé en vis-à-vis des surfaces de contact (6, 7) sur des surfaces de contact (9) inclinées de l'intérieur vers l'extérieur, dans la direction d'action de la force du ressort de serrage (4), par rapport à l'axe de broche (1'), caractérisé en ce qu'il est prévu un guidage forcé qui provoque ledéplacement des coins de serrage (5) le long des surfaces de contact (6) de l'organe d'actionnement (3) vers une position située radialement à l'intérieur par rapport à l'axe de broche (1'), lors du coulissement de l'organe d'actionnement (3) dans la direction opposée à la direction d'action de la force du ressort de serrage (4) et en ce que les coins de serrage (5), dans la position radialement intérieure, lors de la poursuite du mouvement de coulissement de l'organe d'actionnement (3) dans la direction opposée à la direction d'action de la force du ressort de serrage (4) peuvent rentrer dans la chambre intérieure creuse du manchon d'appui (8), lesdits coins de serrage étant en contact par leur surface radialement extérieure (10) avec la surface intérieure (11) du manchon d'appui (8).

2. Dispositif selon la revendication 1, caractérisé en ce qu'une rainure de guidage (20) en contre-dépouille réalisant le guidage forcé pour un des coins de serrage (5) est aménagée chaque fois dans les surfaces de contact (6) de l'organe d'actionnement (3), rainure dans laquelle le coin de serrage (5) s'engage par complémentarité de formes avec un pied de guidage (21).

3. Dispositif selon la revendication 2, caractérisé en ce que la rainure de guidage (20) et le pied de guidage (21) ont une forme de queue d'aronde.

4. Dispositif selon une des revendications 1 à 3, caractérisé en ce que les surfaces de contact (9) pour chaque coin de serrage (5) sur le manchon d'appui (8) sont formées par le fond d'une rainure de guidage (22), contre les parois latérales (23) de laquelle le coin de serrage (5) est appliqué par des surfaces latérales (24) mutuellement parallèles.

5. Dispositif selon une des revendications 1 à 4, caractérisé en ce que les surfaces de contact (6) sur l'élément de traction (2) et les surfaces de contact (9) sur le manchon d'appui (8) forment entre elles un angle qui est suffisamment petit pour que le coin de serrage (5) soit tenu par autoblocage dans la direction de desserrage entre lesdites surfaces.

6. Dispositif selon une des revendications 1 à 5, caractérisé en ce que la partie (2.2) de l'élément de traction (2) portant la surface de contact (7) et l'organe d'actionnement (3) sont disposés coaxialement l'un derrière l'autre et que les coins de serrage (5) sont répartis régulièrement sur le pourtour entre ceux-ci, l'organe d'actionnement (3) étant agencé sous forme de tronçon de tube coaxial avec le manchon d'appui (8).

7. Dispositif selon la revendication 6, caractérisé en ce que l'élément de traction (2) se compose d'un plateau de traction (2.2) qui porte la surface de contact (7) et d'une tige de traction (2.1) liée audit plateau de traction, l'organe d'actionnement (3) entourant en forme de bague la tige de traction (2.1) et des poussoirs de serrage (17) étant guidés coulissants dans la direction axiale dans le plateau de traction (2.2), lesquels poussoirs s'étendent entre les coins de serrage (5) et sont en contact au niveau de leurs extrémités d'un côté avec l'organe d'actionnement (3) et de l'autre, du côté opposé au plateau de serrage (2.2), avec un piston de commande (16) actionné par force.
